(19) Europäisches Patentamt
European Patent Office
Office européen des brevets

(11) EP 1 367 082 B1

(12) **EUROPÄISCHE PATENTSCHRIFT**

(45) Veröffentlichungstag und Bekanntmachung des Hinweises auf die Patenterteilung:
**22.06.2005 Patentblatt 2005/25**

(21) Anmeldenummer: **03011068.8**

(22) Anmeldetag: **20.05.2003**

(51) Int Cl.[7]: **C08J 5/18**, C08L 65/00, B32B 27/36, B32B 27/32, B29C 55/12 // (C08L65/00, 67:02)

(54) **Transparente Polyesterfolie mit verbesserter Wasserdampfbarriere, Verfahren zu ihrer Herstellung und ihre Verwendung**

Transparent polyester film with improved barrier to water vapour, method of preparation and usage

Feuille en polyester transparante à barrière améliorée contre la vapeur d'eau, son procédé de préparation et son utilisation

(84) Benannte Vertragsstaaten:
**DE FR GB IT LU**

(30) Priorität: **28.05.2002 DE 10223663**

(43) Veröffentlichungstag der Anmeldung:
**03.12.2003 Patentblatt 2003/49**

(73) Patentinhaber: **Mitsubishi Polyester Film GmbH**
**65203 Wiesbaden (DE)**

(72) Erfinder:
- **Pfeiffer, Herbert, Dr. Prof.**
  **55126 Mainz (DE)**
- **Hilkert, Gottfried, Dr.**
  **55291 Saulheim (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(56) Entgegenhaltungen:
**EP-A- 1 068 949**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 367 082 B1

## Beschreibung

Die Erfindung betrifft eine transparente, biaxial orientierte Polyesterfolie mit verbesserter Wasserdampfbarriere, ein Verfahren zur Herstellung der Folie und ihre Verwendung.

Transparente, biaxial orientierte Polyesterfolien, die sich durch verbesserte Barriereeigenschaften auszeichnen, sind nach dem Stand der Technik bekannt. In nahezu allen Fällen erhalten die Folien ihre verbesserten Barriereeigenschaften off line, nach der eigentlichen Herstellung durch einen zusätzlichen Verarbeitungsschritt. Beispiele für solche Nachbehandlungen sind die Extrusionsbeschichtung, die Beschichtung oder Laminierung mit Barrierematerialien, die Beschichtung im Vakuum mit Metallen oder mit keramischen Substanzen oder die Plasmapolymerisation in Verbindung mit der Vakuumbeschichtung.

Eine Ausnahme hiervon bildet das in der WO 99/62694 näher beschriebene Verfahren, bei dem eine mehrschichtige, koextrudierte Polyesterfolie, die mindestens eine Schicht aus EVOH (Ethylen-Vinyl-Alkohol) enthält, simultan biaxial verstreckt wird. Die resultierende Folie zeichnet sich durch gute mechanische Eigenschaften und gute Barriereeigenschaften aus. Mit der Folie wird eine Sauerstoffdurchlässigkeit OTR (engl. Oxygen Transmission Rate) erzielt, die nicht kleiner ist als 5 $cm^3/(m^2 \cdot bar \cdot d)$. Über die mit der Folie erzielte Wasserdampfdurchlässigkeit WVTR (engl. Water Vapor Transmission Rate) erhält man keine Auskunft. Nachteilig an diesem Verfahren ist, dass das anfallende Regenerat dem Herstellungsprozess nicht wieder zugeführt werden kann, ohne dass die dann resultierende Folie ihre guten optischen Eigenschaften verliert.

In der US-A 5,912,070 wird ein koextrudiertes Folienlaminat beschrieben, welches gegenüber Temperatur und Stoß resistent ist, eine Barriere gegenüber Wasserdampf zeigt und mittels Hand zerreißbar ist. Die Folie besteht aus einer oder mehreren Lagen eines thermoplastischen Polyesterrohstoffes (A), einer oder mehreren Lagen eines Harzes basierend auf Cycloolefin-Polymeren (C) und einer oder mehreren dazwischenliegenden Schichten eines Haftvermittlers (B). Das Cycloolefin Polymere der Schicht (C) zeichnet sich durch eine Glasübergangstemperatur von 60 bis 120 °C aus und kann sowohl nach dem Ringöffnungsverfahren als auch über Metallocenkatalysatoren hergestellt worden sein. Die Haftvermittlerschicht (B) befindet sich dabei zwischen den beiden Schichten (A) und (C). Als Haftvermittler werden eine Reihe bekannter Polymere genannt, wobei unter den bevorzugten Polymeren pfropfmodifizierte statistische Copolymere auf Basis von Ethylen und $\alpha$-Olefinen aufgeführt werden. Die Pfropfmodifizierung dieser Copolymere wird z.B. durchgeführt mit ungesättigten Dicarbonsäuren oder mit deren Derivaten. In einer bevorzugten Ausführungsform wird die Folie biaxial orientiert. Nachteilig an der Folie ist ihr komplexer, vielschichtiger Aufbau und der damit verbundene hohe technische Aufwand, der zu ihrer Herstellung betrieben werden muss. Insbesondere von Nachteil ist diese Problematik bei einer Wiederverwendung des anfallenden Folienverschnitts. Der Folienverschnitt kann auf Grund der vielen verschiedenartigen Polymere für die drei unterschiedlichen Schichten nicht mehr als Regenerat, z.B. für die Basisschicht (A), wieder verwendet werden, da er in der Regel zu einer unzulässig hohen Gelbfärbung der resultierenden Folie führt.

Die EP-A-1 068 949 betrifft eine weiße, biaxial orientierte Polyesterfolie mit mindestens einer Basisschicht, deren kennzeichnende Merkmale darin bestehen, dass zumindest diese Basisschicht ein Cycloolefincopolymeres (COC) in einer Konzentration von 2 bis 60 Gew.-%, bezogen auf die Basisschicht, enthält, wobei die Glasübergangstemperatur des Cycloolefincopolymeren (COC) im Bereich von 70 bis 270 °C liegt. Die Glasübergangstemperatur des COCs und die Strecktemperaturen sind so gewählt, dass eine opak - weiße Folie mit niedriger Dichte erhalten wird. Die Folie zeichnet sich nicht durch verbesserte Barrierewerte gegenüber Wasserdampf aus. Besitzt beispielsweise eine 23 µm dicke, transparente Standardpolyesterfolie, die kein COC enthält, eine WVTR von 21 $g/(m^2 \cdot d)$, so ergibt sich für eine Folie nach der EP-A-1 068 949, Beispiel 1 (10% COC), eine WVTR von ca. 27 $g/(m^2 \cdot d)$.

Aufgabe der vorliegenden Erfindung war es deshalb, eine Polyesterfolie zur Verfügung zu stellen, die sich durch verbesserte Barriereeigenschaften auszeichnet, insbesondere gegenüber dem Durchtritt von Wasserdampf. Eine solche Folie sollte die Nachteile der Folien aus dem Stand der Technik nicht aufweisen und sich weiterhin dadurch auszeichnen, dass bei der Herstellung der Folie gewährleistet ist, dass das anfallende Regenerat wieder der Extrusion zugeführt werden kann, ohne dass dabei die physikalischen und optischen Eigenschaften der resultierenden Folie, insbesondere aber die Barriere gegenüber Wasserdampf, nennenswert negativ beeinflusst werden.

Andererseits sollten sich gleichzeitig die anderen, eine Polyesterfolie auszeichnenden Eigenschaften nicht verschlechtern. Hierzu gehören beispielsweise die mechanischen und die thermischen Eigenschaften, das Wickelverhalten und die Verarbeitbarkeit der Folie, insbesondere bei einer nachfolgenden Bedruckung, Kaschierung oder einer Beschichtung mit metallischen oder keramischen Materialien.

Gelöst wird diese Aufgabe durch eine transparente, biaxial orientierte Polyesterfolie mit einer Basisschicht B, die mindestens 5 Gew.-% eines thermoplastischen Polyesters enthält, dadurch gekennzeichnet, dass

a) die Basisschicht B ein Cyloolefincopolymer (COC) in einem Anteil von 10 bis 95 Gew.-% enthält,
b) die Glasübergangstemperatur des Cycloolefincopolymeren $T_g$ kleiner als 120 °C ist und
c) der Permeationskoeffizient für Wasserdampf der Folie kleiner als 18 $g[20\ \mu m]/m^2 \cdot d$ ist.

Bevorzugt weist diese Folie eine Trübung von kleiner als 20 % auf.

Diese Gew-% -Angaben beziehen sich auf das Gesamtgewicht der Basisschicht B. d bedeutet Tag.

Die biaxial orientierte, transparente Polyesterfolie nach der vorliegenden Erfindung weist eine gegenüber Folien nach dem Stand der Technik verringerte Wasserdampfdurchlässigkeit auf.

Die Folie nach der vorliegenden Erfindung besteht bevorzugt allein aus der erfindungsgemäßen Basisschicht B. Daneben kann sie auch mehrschichtig aufgebaut sein. Sie besteht dann bevorzugt aus der erfindungsgemäßen Basisschicht B und einer oder mehreren Deckschichten.

Die Basisschicht der Folie besteht bevorzugt zu mindestens 10 Gew.-%, bezogen auf das Gewicht der Basisschicht B, aus einem thermoplastischen Polyester (= Komponente I). Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. In vorteilhafter Weise können als Komponente I der Basisschicht B auch Copolymere oder Mischungen oder Blends aus Homo- und/oder Copolymeren verwendet werden.

Besonders zweckmäßig ist, wenn in der Basisschicht B als Komponente I ein Polyester-Copolymer auf Basis von Isophthalsäure und Terephthalsäure verwendet wird. In diesem Fall sind die optischen Eigenschaften der Folie und die erzielten Barriereeigenschaften der Folie gemäß der vorliegenden Erfindung besonders gut.

Im diesem Fall enthält die Basisschicht B der erfindungsgemäßen Folie im wesentlichen als Komponente I ein Polyestercopolymer, das überwiegend aus Isophthalsäure- und Terephthalsäure-Einheiten und aus Ethylenglykol-Einheiten zusammengesetzt ist und als Komponente II das COC.

Die bevorzugten Copolyester (Komponente I), die die gewünschten Eigenschaften der Folie bereitstellen (Optik, Haftung, gemeinsame Verstreckbarkeit), sind solche, die aus Etylenterephthalat- und Ethylenisophthalat-Einheiten aufgebaut sind. Der Anteil an Ethylenterephthalat beträgt bevorzugt 40 bis 97 Mol-% und der entsprechende Anteil an Ethylenisophthalat 60 bis 3 Mol-%. Bevorzugt sind weiterhin Copolyester, bei denen der Anteil an Ethylenterephthalat 50 bis 90 Mol-% und der entsprechende Anteil an Ethylenisophthalat 50 bis 10 Mol-% beträgt, und ganz besonders bevorzugt sind Copolyester, bei denen der Anteil an Ethylenterephthalat 60 bis 85 Mol-% und der entsprechende Anteil an Ethylenisophthalat 40 bis 15 Mol-% beträgt.

Geeignete weitere aliphatische Diole in bezug auf die Komponente I sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X bevorzugt für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Geeignete weitere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$)-Alkandisäuren besonders geeignet, wobei der Alkanteil geradkettig oder verzweigt sein kann.

Die Herstellung der Polyester (Komponente I) kann nach allgemein bekannten Verfahren z B. nach dem Umesterungsverfahren erfolgen. Dabei geht man von Dicarbonsäureestem und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält die Basisschicht B bevorzugt ein Cycloolefincopolymeres COC (= Komponente II) in einer Menge von bevorzugt 10 bis 95 Gew.-%, bevorzugt in einer Menge von 15 bis 90 Gew.-% und besonders bevorzugt in einer Menge von 20 bis 85 Gew.-%, bezogen auf das Gewicht der Basisschicht B. Bei einem Gewichtsanteil des COCs von kleiner als 10 % an der Basisschicht B ist der positive Effekt auf die Wasserdampfbarriere meist unzureichend.

Es ist für die vorliegende Erfindung wesentlich, dass das Cycloolefincopolymere COC so ausgewählt wird, dass es mit den weiteren Komponenten der Basisschicht B (im Wesentlichen die Komponente 1, wie zuvor beschrieben) und mit den Polyesterrohstoffen eventuell vorhandener anderer Schichten (z.B. Deckschichten A und C) gemeinsam verstreckt werden kann, ohne dass hierbei nennenswert Vakuolen gebildet werden. Diese tragen zur Verschlechterung der Barriereeigenschaften bei und würden gleichzeitig die optischen Eigenschaften der Folie nachhaltig negativ beeinflussen.

Ein für die vorliegende Erfindung wesentliches Auswahlkriterium für das Cycloolefincopolymere ist die Glasübergangstemperatur $T_g$, die erfindungsgemäß kleiner als 120 °C sein muss, bevorzugt kleiner als 100 °C und besonders bevorzugt kleiner als 80 °C sein sollte. Wird ein Cycloolefincopolymer mit einer größeren Glasübergangstemperatur als 120 °C in der Basisschicht B verwendet, ist oft nicht mehr gewährleistet, dass sich das Cycloolefincopolymere gemeinsam mit den anderen Polyesterpolymeren der Folie verstrecken lässt. In diesem Fall separiert sich das Cycloolefincopolymere bei der biaxialen Streckung von den anderen Polymeren und es bilden sich Vakuolen, die unerwünscht sind.

Cycloolefinpolymere sind Homopolymerisate oder Copolymerisate, welche polymerisierte Cycloolefineinheiten und gegebenenfalls acyclische Olefine als Comonomer enthalten. Für die vorliegende Erfindung sind Cycloolefinpolymere geeignet, die 0,1 bis 100 Gew.-%, bevorzugt 10 bis 99 Gew.-%, besonders bevorzugt 50 bis 95 Gew.-%, jeweils bezogen auf die Gesamtmasse des Cycloolefinpolymeren, polymerisierte Cycloolefineinheiten enthalten. Bevorzugt sind insbesondere Polymere, die cyclische Olefine der Formeln I, II, III, IV, V oder VI enthalten bzw. aus diesen aufgebaut sind:

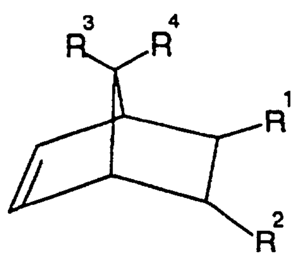 (I) 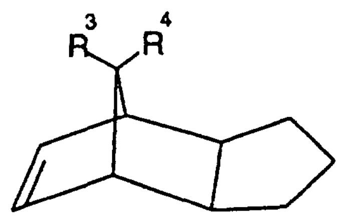 (II)

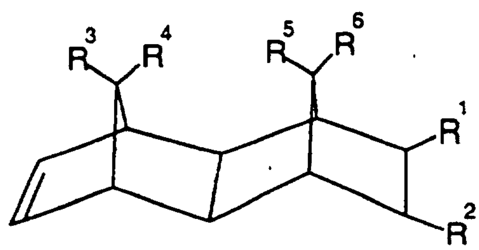 (III)

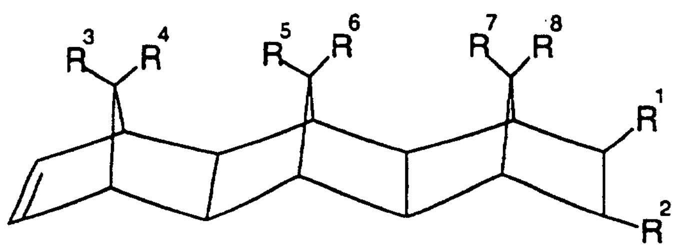 (IV) ;

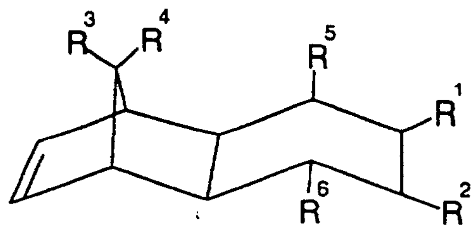

(V)

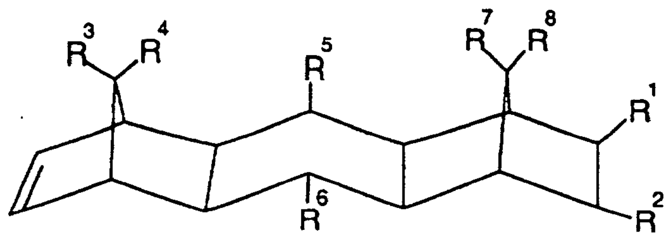

(VI)

In diesen Formeln sind $R^1$, $R^2$, $R^3$, $R^4$, $R^5$, $R^6$, $R^7$ und $R^8$ gleich oder verschieden und bedeuten unabhängig voneinander ein Wasserstoffatom oder einen $C_1$-$C_{30}$-Kohlenwasserstoffrest; oder zwei oder mehrere der Reste $R^1$ bis $R^8$ sind cyclisch miteinander verbunden, wobei gleiche Reste in den verschiedenen Formeln gleiche oder unterschiedliche Bedeutung haben können. Bevorzugte $C_1$-$C_{30}$-Kohlenwasserstoffreste sind beispielsweise lineare oder verzweigte $C_1$-$C_8$-Alkylreste, $C_6$-$C_{18}$-Arylreste, $C_7$-$C_{20}$-Alkylenarylreste oder cyclische $C_3$-$C_{20}$-Alkylreste oder acyclische $C_2$-$C_{20}$-Alkenylreste.

Die Cycloolefinpolymere können 0 bis bevorzugt 45 Gew.-%, bezogen auf die Gesamtmasse des Cycloolefinpolymeren, polymerisierte Einheiten mindestens eines monocyclischen Olefins der Formel VII enthalten:

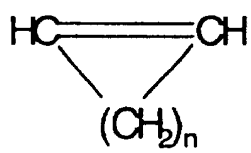

(VII)

Hierin ist n bevorzugt eine Zahl von 2 bis 10.

Weiterhin können die Cycloolefinpolymere (Komponente II) 0 bis 99 Gew.-%, bezogen auf die Gesamtmasse des Cycloolefinpolymeren, polymerisierte Einheiten eines acyclischen Olefins der Formel VIII enthalten:

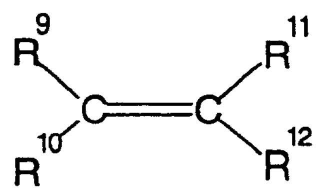

(VIII)

Hierin sind $R^9$, $R^{10}$, $R^{11}$, und $R^{12}$ gleich oder verschieden und bedeuten unabhängig voneinander ein Wasserstoffatom oder einen $C_1$-$C_{10}$-Kohlenwasserstoffrest, z.B. einen $C_1$-$C_8$-Alkylrest oder $C_6$-$C_{14}$-Arylrest.

Ebenfalls prinzipiell geeignet sind Cycloolefinpolymere, welche durch ringöffnende Polymerisation mindestens eines der Monomere der Formeln I bis VI und anschließende Hydrierung erhalten werden.

Cycloolefinhomopolymere sind aus einem Monomeren der Formeln I-VI aufgebaut. Diese Cycloolefin-Polymere oder Copolymere der Formeln I - VI mit VII sind für die Zwecke der vorliegenden Erfindung weniger geeignet.

Für die Zwecke der vorliegenden Erfindung sind insbesondere Cycloolefincopolymerisate (COC) geeignet, welche mindestens ein Cycloolefin der Formeln I bis VI und mindestens ein acyclisches Olefin der Formel VIII als Comonomer enthalten. Im vorstehenden wie im nachfolgenden werden diese erfindungsgemäß bevorzugt verwendbaren Cycloolefincopolymerisate COC genannt. Dabei sind als acyclische Olefine VIII solche bevorzugt, die insgesamt 2 bis 20 C-Atome aufweisen, insbesondere unverzweigte acyclische Olefine mit 2 bis 10 C-Atomen wie beispielsweise Ethylen, Propylen und/oder Butylen. Der Anteil polymerisierter Einheiten acyclischer Olefine der Formel VIII beträgt bis zu 99 Gew.-%, bevorzugt 5 bis 80 Gew.-%, besonders bevorzugt 10 bis 60 Gew.-%, bezogen auf das Gesamtgewicht des jeweiligen Cycloolefincopolymers.

Unter den vorstehend beschriebenen Cycloolefincopolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind auch Cycloolefincopolymere (COC), die polymerisierte Einheiten acyclischer Olefine, insbesondere Ethylen, enthalten. Wiederum besonders bevorzugt sind Norbonen/Ethylen- und Tetracyclododecen/Ethylen-Copolymere, welche 5 bis 80 Gew.-%, vorzugsweise 10 bis 60 Gew.-% an Ethyleneinheiten enthalten (bezogen auf das Gewicht des Copolymeren).

Die vorstehend beschriebenen Cycloolefinpolymere weisen im allgemeinen Glasübergangstemperaturen zwischen -20 °C und 400 °C auf. Für die vorliegende Erfindung sind insbesondere Cycloolefincopolymerisate (COC) verwendbar, die eine Glasübergangstemperatur $T_g$ von kleiner als 120 °C, bevorzugt von kleiner als 100 °C und besonders bevorzugt von kleiner als 80 °C, aufweisen. Die Viskositätszahl (Dekalin, 135 °C, DIN 53 728) liegt zweckmäßigerweise zwischen 0,1 und 200 ml/g, bevorzugt zwischen 50 und 150 ml/g.

Die Herstellung der Cycloolefincopolymere (COC) geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf die in obengenannten Schriften beschriebenen Herstellungsverfahren von Cycloolefinpolymeren wird hiermit ausdrücklich Bezug genommen.

Für die Folie gemäß dervorliegenden Erfindung wurden Cycloolefincopolymere (COC), die mittels Katalysatoren, die auf löslichen Metallocenkomplexen basieren, hergestellt wurden, in besonders bevorzugter Weise verwendet.

Die Cycloolefincopolymere werden entweder als reines Granulat oder als granuliertes Konzentrat (Masterbatch) in die Folie eingearbeitet. Das Polyestergranulat (Komponente I) wird dazu mit dem Cycloolefincopolymer (COC; Komponente II) bzw. dem Cycloolefincopolymer (COC) -Masterbatch vorgemischt und anschließend dem Extruder zugeführt. Im Extruder werden die Komponenten weiter vermischt und auf Verarbeitungstemperatur erwärmt. Dabei ist es für das erfindungsgemäße Herstellungsverfahren zweckmäßig, dass die Extrusionstemperatur deutlich oberhalb der Glasübergangstemperatur $T_g$ des Cycloolefincopolymeren (COC) liegt, im allgemeinen mindestens 30 °C, vorzugsweise 40 bis 230 °C, insbesondere aber 50 bis 200 °C, über der Glasübergangstemperatur des Cycloolefincopolymeren (COC).

Die Folie nach der vorliegenden Erfindung ist mindestens und gleichzeitig bevorzugt aus der erfindungsgemäßen Basisschicht B aufgebaut. Darüber hinaus kann die Folie zusätzliche Schichten aufweisen, die als Deckschichten bezeichnet werden. Typische Folienaufbauten sind dann ABA oder ABC, wobei A und C entsprechende Deckschichten darstellen, die gleich oder verschieden sein können.

Für die Deckschichten können prinzipiell die gleichen Polymere und Zusammensetzungen verwendet werden wie für die Basisschicht B. Daneben können in den Deckschichten aber auch andere Materialien enthalten sein, wobei dann die Deckschichten bevorzugt aus einem Gemisch von Polymeren, einem Copolymeren oder einem Homopolymeren bestehen, welche Ethylen-isophthalat-Einheiten und/oder Ethylen-2,6-naphthalat-Einheiten und/oder Ethylenterephthalat-Einheiten enthalten. Bis zu 10 Mol-% dieser Polymere können aus weiteren Comonomeren bestehen.

In vorteilhafter Weise können für die Deckschichten als weitere Komponenten auch Copolymere oder Mischungen oder Blends aus Homo- und/oder Copolymeren verwendet werden.

Besonders zweckmäßig ist, wenn in den Deckschichten ein Polyester-Copolymer auf Basis von Isophthalsäure und Terephthalsäure verwendet wird. In diesem Fall sind die optischen Eigenschaften der Folie und die erzielten Barriereeigenschaften der Folie gemäß der vorliegenden Erfindung besonders gut.

Im diesem Fall enthalten die Deckschichten oder die Deckschicht der erfindungsgemäßen Folie im wesentlichen ein Polyestercopolymeres, das überwiegend oder ganz aus Isophthalsäure- und Terephthalsäure-Einheiten und aus Ethylenglykol-Einheiten zusammengesetzt ist. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Eigenschaften der Folie bereitstellen (Optik, Haftung, gemeinsame Verstreckbarkeit), sind solche, die aus Etylenterephthalat- und Ethylenisophthalat-Einheiten aufgebaut sind. Der Anteil an Ethylenterephthalat beträgt bevorzugt 40 bis 97 Mol-% und der entsprechende Anteil an Ethylenisophthalat 60 bis 3 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt, und ganz besonders bevorzugt sind Copolyester, bei denen der Anteil an Ethylenterephthalat 60 bis 85 Mol-% und der entsprechende Anteil an Ethylenisophthalat 40 bis 15 Mol-% beträgt.

Daneben können die Deckschichten auch ein Cycloolefincopolymeres COC enthalten, wie es zuvor für die Basisschicht B näher beschrieben wurde. Der Gewichtsanteil der COCs in der Deckschicht bzw. den Deckschichten beträgt dabei zweckmäßiger Weise 5 bis 90 Gew.-%, bevorzugt 10 bis 80 Gew.-% und besonders bevorzugt 15 bis 70 Gew.-%, bezogen auf das Gewicht der jeweiligen Deckschicht.

Die Dicke der Deckschichten ist größer als 1,0 µm und liegt bevorzugt im Bereich von 1,5 bis 20 µm und besonders bevorzugt im Bereich von 2,0 bis 10µm.

Die Basisschicht B und/oder die Deckschichten können zusätzlich übliche Additive, wie z. B. Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehreren Antiblockmitteln oder Mischungen von Antiblockmitteln gleicher Zusammensetzung aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als vorteilhaft haben sich Pigmentkonzentrationen in den Schichten von 0,0001 bis 5 Gew.-% erwiesen. Eine detaillierte Beschreibung der Antiblockmittel findet sich beispielsweise in der EP-A-0 602 964.

Die Gesamtdicke der erfindungsgemäßen Polyesterfolie kann innerhalb weiter Grenzen variieren und richtet sich nach dem beabsichtigten Verwendungszweck. Sie beträgt meist 6 bis 300 µm, vorzugsweise 8 bis 200 µm, besonders bevorzugt 10 bis 100 µm, wobei die Basisschicht B einen Anteil von vorzugsweise 40 bis 100 % an der Gesamtdicke hat.

Gegenstand der vorliegenden Erfindung ist auch ein Verfahren zur Herstellung der erfindungsgemäßen Folien. Zur Herstellung der Basisschicht B werden zweckmäßiger Weise die jeweiligen Komponenten (Komponente I = Polyesterhomo- oder Polyestercopolymeres oder Mischungen hiervon, Komponente II = COC-Granulat) direkt dem Extruder zugeführt. Die Materialien lassen sich bei etwa 300 °C extrudieren. Aus verfahrenstechnischer Sicht (Durchmischung der vergleichsweise sehr unterschiedlichen Polymere, Klebeneigung der Cycloolefincopolymere an metallischen Wänden, da die Glasübergangstemperatur kleiner als 120 °C ist) hat es sich dabei als besonders günstig erwiesen, die Extrusion zumindest der Polymere für die Basisschicht B auf einem Zweischneckenextruder mit Entgasungsmöglichkeit(en) durchzuführen.

Die Polymere für die Deckschichten werden zweckmäßig über einen weiteren Extruder zugeführt; auch hier ist aus prinzipiellen Erwägungen der Zweischneckenextruder dem Einschneckenextruder vorzuziehen. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Streckung wird im allgemeinen sequentiell durchgeführt. Dabei wird vorzugsweise erst in Längsrichtung, d.h. in Maschinenrichtung, und anschließend in Querrichtung, d.h. senkrecht zur Maschinenrichtung, gestreckt. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im allgemeinen wird die Streckung in Längsrichtung in einem Temperaturbereich von 80 (Aufheiztemperatur 80 bis 130 °C) bis 130 °C (Strecktemperatur 80-130 °C, abhängig vom Streckwerk) und die Querstreckung in einem Temperaturbereich von 80 bis 140 °C durchgeführt. Das Längsstreckverhältnis liegt bevorzugt im Bereich von 2,0:1 bis 5,0:1, insbesondere von 2,3:1 bis 4,8:1. Das Querstreckverhältnis liegt allgemein im Bereich von 2,5:1 bis 5,0:1, bevorzugt von 2,8:1 bis 4,5:1.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Ein weiterer Vorteil der Erfindung besteht darin, dass die Herstellungskosten der erfindungsgemäßen Folie nicht wesentlich über denen einer Folie aus Standardpolyesterrohstoffen liegen. Daneben ist bei der Herstellung der Folie gewährleistet, dass Verschnittmaterial, das bei der Folienherstellung im Betrieb anfällt, als Regenerat in einer Menge von bis zu 60 Gew.-%, bevorzugt 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich neben einer Vielzahl weiterer Anwendungen hervorragend zum Verpacken von Nahrungs- und Genussmitteln. Die erfindungsgemäße Folie zeichnet sich durch hervorragende Barriereeigenschaften, insbesondere gegenüber Wasserdampf aus.

Die nachstehende Tabelle (Tabelle 1) fasst die wichtigsten erfindungsgemäßen Folieneigenschaften noch einmal zusammen.

**Tabelle 1**

| | Erfindungsgemäßer Bereich | Bevorzugt | Besonders bevorzugt | Einheit | Messmethode |
|---|---|---|---|---|---|
| **Basisschicht B** | | | | | |
| Komponente I = Polyesterhomo- und/oder Polyestercopolymeres | 5 bis 95 | 10 bis 90 | 15 bis 85 | Gew.-% | |
| Komponente II= Cycloolefinisches Copolymer COC | 10 bis 95 | 15 bis 90 | 20 bis 85 | Gew.-% | |
| Glasübergangstemperatur des verwendeten COC's | < 120 | < 100 | < 80 | °C | |
| Dicke der Folie | 6 bis 300 | 8 bis 200 | 10 bis 100 | µm | |
| **Folieneigenschaften** | | | | | |
| Permeationskoeffizient für Wasserdampf | < 18 | < 16 | < 14 | $g \cdot [20\ \mu m]/(m^2 \cdot d)$ | DIN 53122, Teil 2, Klima B |
| Wasserdampfdurchlässigkeit (einer 20 µm dicken Folie) | < 18 | < 16 | < 14 | $g/(m^2 \cdot d)$ | DIN 53122, Teil 2, Klima B |
| Trübung der Folie | < 20 | < 15 | < 10 | % | ASTM-D 1003-52 |

**Messmethoden**

Zur Charakterisierung der Rohstoffe und der Folien wurden die folgenden Methoden benutzt:

DIN = Deutsches Institut für Normung
ASTM = American Society for Testing and Materials

(1) Wasserdampfdurchlässigkeit (WVTR)

Die Messung der Wasserdampfdurchlässigkeit erfolgte mit einem Wasserdampfdurchlässigkeitsmessgerät WDDG der Fa. Brugger/München nach DIN 53122, Teil 2, Klima B (37,8 °C, 90 % relative Luftfeuchtigkeit auf einer Seite der Folie).

(2) Trübung

Die Trübung der Folie wurde in Anlehnung an ASTM-D 1003-52 bestimmt.

(3) SV-Wert (standard viscosity)

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV = [\eta] = 6{,}907 \cdot 10^{-4}\ SV\ (DCE) + 0{,}063096\ [dl/g]$$

(4) Glasübergangstemperaturen $T_g$

Die Glasübergangstemperaturen $T_g1$ und $T_g2$ wurden anhand von Folienproben mit Hilfe der DSC (Differential Scanning Calorimetry) bestimmt. Verwendet wurde ein Gerät DSC 1090 der Fa. DuPont. Die Aufheizgeschwindigkeit betrug 20 K/min und die Einwaage ca. 12 mg. Im ersten Aufheizvorgang wurde der Glasübergang $T_g1$ ermittelt. Die Proben zeigten vielfach eine Enthalpierelaxation (ein Peak) zu Beginn des stufenförmigen Glasübergangs. Als $T_g1$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet. Möglicherweise überdeckten die peakförmigen Enthalpierelaxationen die Feinstruktur der Stufe oder die Auflösung des Gerätes war für eine Auftrennung der kleinen, "verschmierten" Übergänge von orientierten, kristallinen Proben nicht ausreichend. Um die thermische Vorgeschichte zu eliminieren, wurden die Proben nach dem Aufheizen 5 Minuten bei 300°C gehalten und dann anschließend mit flüssigem Stickstoff abgeschreckt. Aus dem Thermogramm für das zweite Aufheizen wurde die Temperatur für den Glasübergang $T_g2$ als die Temperatur bei halber Stufenhöhe entnommen.

**Beispiele**

Die folgenden Beispiele illustrieren die Erfindung. Die verwendeten Produkte (Marken und Herstellerfirma) sind jeweils nur einmal angegeben und beziehen sich dann auch auf die folgenden Beispiele.

Beispiel 1

Chips aus Polyethylenterephthalat und COC wurden in einem Mischungsverhältnis von 80:20 (Gew.-%) direkt dem Extruder (Zweischneckenextruder ZSK der Fa. Werner & Pfleiderer) für die Basisschicht B zugeführt. Dort wurden die beiden Materialien bei einer Temperatur von etwa 300 °C extrudiert. Die Schmelze wurde filtriert und in einer Breitschlitzdüse zu einem Flachfilm ausgeformt. Der Film wurde über die Düsenlippe ausgestoßen und auf einer Kühlwalze verfestigt. Die Verweilzeit der Polymeren in der Extrusion betrug ca. 5 min.

Die einschichtige Folie bestehend aus der erfindungsgemäßen Basisschicht B hatte eine Gesamtdicke von 20 µm.

Basisschicht B:

COC (®Topas 8007 der Firma Ticona, Deutschland mit einer $T_g$ von ca. 75 °C)
Polyethylenterephthalat mit einem SV-Wert von 800

Die einzelnen Verfahrensschritte waren:

| | | | |
|---|---|---|---|
| Extrusion | Temperaturen | Basisschicht B | 300 °C |
| Längsstreckung | Temperaturbereich:<br>Erste Aufheizwalze 85 °C<br>Streckwalze 130 °C | | 85-130 °C |
| | Längsstreckverhältnis | | 3,4:1 |
| Querstreckung | Temperaturbereich<br>Aufheizfelder 85 bis 95 °C<br>Streckfelder 110 bis 135 °C | | 85-135 °C |
| | Querstreckverhältnis | | 3,6:1 |
| Fixierung | Temperatur | | 230 °C |

Die Folie hatte die geforderte Wasserdampfdurchlässigkeit und die gewünschte Trübung.

Beispiel 2

Wie in Beispiel 1 wurde eine einschichtige Folie mit einer Gesamtdicke von 20 µm hergestellt.

Basisschicht B:

COC (®Topas 8007 der Firma Ticona mit einer $T_g$ von ca. 75 °C)
Polyethylenterephthalat mit einem SV-Wert von 800.

Beispiel 3

Wie in Beispiel 1 wurde eine einschichtige Folie mit einer Gesamtdicke von 20 µm hergestellt.

Basisschicht B:

COC (®Topas 8007 der Firma Ticona mit einer $T_g$ von ca. 75 °C)
Polyethylenterephthalat mit einem SV-Wert von 800.

Die Verfahrensbedingungen in den Beispielen 2 und 3 waren wie im Beispiel 1.

Vergleichsbeispiel VB1

Es wurde eine Folie entsprechend Beispiel 1 hergestellt. Die Basisschicht B enthielt in diesem Fall kein COC.

Basisschicht B:

100 Gew.-% Polyethylenterephthalat mit einem SV-Wert von 800

Vergleichsbeispiel VB2

Es wurde eine Folie entsprechend Beispiel 1 hergestellt. Das COC in der Basisschicht B hatte in diesem Fall eine Glasübergangstemperatur von 150 °C.

Basisschicht B:

COC (®Topas 6015 der Firma Ticona mit einer $T_g$ von ca. 150 °C)
Polyethylenterephthalat mit einem SV-Wert von 800

Die Eigenschaften der gemäß den Beispielen und den Vergleichsbeispielen hergestellten Folien sind in Tabelle 2 zusammengestellt.

**Tabelle 2**

| Beispiele | Foliendicke | Folien-Aufbau | COC-Anteil in Basisschicht B | Glastemperatur COC | Permeationskoeffizient-Wasserdampf | Wasserdampfdurchlässigkeit | Trübung der Folie |
|---|---|---|---|---|---|---|---|
| | (µm) | | (%) | $T_g$ | $(g \cdot [20 \mu m]/m^2 \cdot d)$ | $(g/m^2 \cdot d)$ | (%) |
| B 1 | 20 | B | 20 | 75 | 16 | 16 | 12 |
| B 2 | 20 | B | 30 | 75 | 14 | 14 | 14 |
| B 3 | 20 | B | 40 | 75 | 12 | 12 | 16 |
| | | | | | | | |
| VB 1 | 20 | B | 0 | | 22 | 22 | 2,0 |
| VB 2 | 20 | B | 20 | 150 | 23 | 23 | 65 |
| | | | | | | | |

**Patentansprüche**

1. Transparente, biaxial orientierte Polyesterfolie mit einer Basisschicht B, die mindestens 5 Gew.-% eines thermoplastischen Polyester enthält, **dadurch gekennzeichnet, dass**

a) die Basisschicht B ein Cycloolefincopolymer (COC) in einem Anteil von 10 bis 95 Gew.-% enthält,
b) die Glasübergangstemperatur des Cycloolefincopolymeren $T_g$ kleiner als 120 °C ist und
c) der Permeationskoeffizient für Wasserdampf der Folie kleiner als 18 g · [20 μm]/m² · d ist.

**2.** Polyesterfolie nach Anspruch 1, **dadurch gekennzeichnet, dass** die Basisschicht B das COC in einem Anteil von 15 bis 90 Gew.-%, bevorzugt in einem Anteil von 20 bis 85 Gew.-%, enthält.

**3.** , Polyesterfolie nach Anspruch 1 oder 2, **dadurch gekennzeichnet, dass** die Glasübergangstemperatur des COC kleiner als 100 °C, bevorzugt kleiner als 80 °C, ist.

**4.** Polyesterfolie nach einem oder mehreren der Ansprüche 1 bis 3, **dadurch gekennzeichnet, dass** das COC mindestens ein Cycloolefin und mindestens ein acyclisches Olefin als Comonomere enthält.

**5.** Polyesterfolie nach einem oder mehreren der Ansprüche 1 bis 4, **dadurch gekennzeichnet, dass** das COC als Cycloolefincomonomer Norbornen und/oder Tetracyclododecen und als acyclisches Comonomer Ethylen, Propylen und/oder Butylen enthält.

**6.** Polyesterfolie nach einem oder mehreren der Ansprüche 1 bis 5, **dadurch gekennzeichnet, dass** als thermoplastischer Polyester der Basisschicht B Polyesterhomo- und/oder Polyestercopolymere verwendet werden.

**7.** Polyesterfolie nach einem oder mehreren der Ansprüche 1 bis 6, **dadurch gekennzeichnet, dass** als thermoplastischer Polyester der Basisschicht B Polyethylenterephthalat, Polyethylen-2,6-naphthalat und/oder ein Copolymer verwendet wird, das aus Ethylenterephthalat- und Ethylenisophthalat-Einheiten aufgebaut ist.

**8.** Polyesterfolie nach einem oder mehreren der Ansprüche 1 bis 7, **dadurch gekennzeichnet, dass** die Folie neben der Basisschicht B eine oder mehrere weitere Schichten aufweist.

**9.** Polyesterfolie nach einem oder mehreren der Ansprüche 1 bis 8, **dadurch gekennzeichnet, dass** die Folie einen Schichtaufbau ABC hat, wobei die Deckschichten A und C gleich oder verschieden sein können.

**10.** Polyesterfolie nach einem oder mehreren der Ansprüche 1 bis 9, **dadurch gekennzeichnet, dass** die Deckschichten das COC der Basisschicht und/oder ein Polyestercopolymer enthalten, das aus Ethylenterephthalat- und Ethylenisophthalat-Einheiten aufgebaut ist.

**11.** Polyesterfolie nach einem oder mehreren der Ansprüche 1 bis 10, **dadurch gekennzeichnet, dass** die Folie eine Trübung von kleiner als 20% aufweist.

**12.** Polyesterfolie nach einem oder mehreren der Ansprüche 1 bis 11, **dadurch gekennzeichnet, dass** die Basis- und/oder die Deckschichten zusätzliche Additive, wie Stabilisatoren und/oder Antiblockmittel, enthalten.

**13.** Verfahren zur Herstellung einer Polyesterfolie nach einem oder mehreren der Ansprüche 1 bis 12 umfassend die Schritte

a) Herstellen einer ein- oder mehrschichtigen Folie durch Extrusion oder Koextrusion und Ausformen der Schmelzen zu flachen Schmelzfilmen,

b) biaxiales Strecken der Folie und

c) Thermofixieren der gestreckten Folie

**14.** Verwendung einer Polyesterfolie nach einem oder mehreren der Ansprüche 1 bis 12 als Barrierefolie für Wasserdampf und zum Verpacken von Nahrungs- und Genussmitteln.

## Claims

1. A transparent, biaxially oriented polyester film which has a base layer B composed of at least 5% by weight of a thermoplastic polyester, wherein

   a) the base layer B comprises a fraction of from 10 to 95% by weight of a cycloolefin copolymer (COC),
   b) the glass transition temperature $T_g$ of the cycloolefin copolymer is below 120°C, and
   c) the permeation coefficient of the film for water vapor is smaller than 18 g · [20 μm]/m$^2$ · d.

2. The polyester film as claimed in claim 1, wherein the base layer B comprises a fraction of from 15 to 90% by weight, preferably a fraction of from 20 to 85% by weight, of the COC.

3. The polyester film as claimed in claim 1 or 2, wherein the glass transition temperature of the COC is below 100°C, preferably below 80°C.

4. The polyester film as claimed in one or more of claims 1 to 3, wherein the COC contains at least one cycloolefin and at least one acyclic olefin as comonomers.

5. The polyester film as claimed in one or more of claims 1 to 4, wherein the COC contains, as cycloolefin comonomer, norbornene and/or tetracyclododecene, and, as acyclic comonomer, ethylene, propylene, and/or butylene.

6. The polyester film as claimed in one or more of claims 1 to 5, wherein the thermoplastic polyester used in the base layer B comprises polyester homo- and/or copolymers.

7. The polyester film as claimed in one or more of claims 1 to 6, wherein the thermoplastic polyester used in the base layer B comprises polyethylene terephthalate, polyethylene 2,6-naphthalate and/or a copolymer composed of ethylene terephthalate units and ethylene isophthalate units.

8. The polyester film as claimed in one or more of claims 1 to 7, which has one or more other layers together with the base layer B.

9. The polyester film as claimed in one or more of claims 1 to 8, which has an ABC layer structure, where the outer layers A and C may be identical or different.

10. The polyester film as claimed in one or more of claims 1 to 9, wherein the outer layers comprise the COC of the base layer and/or comprise a polyester copolymer composed of ethylene terephthalate units and ethylene isophthalate units.

11. The polyester film as claimed in one or more of claims 1 to 10, which has a haze of less than 20%.

12. The polyester film as claimed in one or more of claims 1 to 11, wherein the base and/or the outer layers comprise additional additives, such as stabilizers and/or antiblocking agents.

13. A process for producing a polyester film as claimed in one or more of claims 1 to 12, encompassing the steps of

    a) producing a single-layer or multilayer film by extrusion or coextrusion, and shaping the melts to give flat melt films,

    b) stretching the film biaxially, and

    c) heat-setting the stretched film.

14. The use of a polyester film as claimed in one or more of claims 1 to 12 as a barrier film for water vapor, or for the packaging of foods and other consumable items.

## Revendications

1. Feuille de polyester transparente, biaxialement orientée ayant une couche de base B qui contient au moins 5 % en poids d'un polyester thermoplastique, **caractérisée en ce que**

    a) la couche de base B contient un copolymère de cyclooléfine (COC) dans une proportion de 10 à 95 % en poids,
    b) la température de transition $T_g$ vitreuse du copolymère de cyclooléfine est inférieure à 120°C et
    c) le coefficient de perméation pour la vapeur d'eau de la feuille est inférieur à 18 g.[20 μm]/$m^2$·d.

2. Feuille de polyester selon la revendication 1, **caractérisée en ce que** la couche de base B contient le COC dans une proportion de 15 à 90 % en poids, de préférence dans une proportion de 20 à 85 % en poids.

3. Feuille de polyester selon la revendication 1 ou 2, **caractérisée en ce que** la température de transition vitreuse du COC est inférieure à 100°C, de préférence inférieure à 80°C.

4. Feuille de polyester selon une ou plusieurs des revendications 1 à 3, **caractérisée en ce que** le COC contient au moins une cyclooléfine et au moins une oléfine acyclique comme comonomère.

5. Feuille de polyester selon une ou plusieurs des revendications 1 à 4, **caractérisée en ce que** le COC contient en tant que comonomère de cyclooléfine le norbornène et/ou le tétracyclododécène et en tant que comonomère acyclique l'éthylène, le propylène et/ou le butylène.

6. Feuille de polyester selon une ou plusieurs des revendications 1 à 5, **caractérisée en ce que** des homo- et/ou copolymères de polyester sont utilisés en tant que polyester thermoplastique de la couche de base B.

7. Feuille de polyester selon une ou plusieurs des revendications 1 à 6, **caractérisée en ce que** le téréphtalate de polyéthylène, le 2,6-naphtalate de polyéthylène et/ou un copolymère qui est formé d'unités de téréphtalate d'éthylène et d'isophtalate d'éthylène, sont utilisés en tant que polyester thermoplastique de la couche de base B.

8. Feuille de polyester selon une ou plusieurs des revendications 1 à 7, **caractérisée en ce que** la feuille présente à côté de la couche de base B une ou plusieurs couches supplémentaires.

9. Feuille de polyester selon une ou plusieurs des revendications 1 à 8, **caractérisée en ce que** la feuille a une formation en couches ABC, les couche superficielles A et C pouvant être identiques ou différentes.

10. Feuille de polyester selon une ou plusieurs des revendications 1 à 9, **caractérisée en ce que** les couches superficielles contiennent le COC de la couche de base et/ou un copolymère de polyester qui est formé d'unités de téréphtalate d'éthylène et d'isophtalate d'éthylène.

11. Feuille de polyester selon une ou plusieurs des revendications 1 à 10, **caractérisée en ce que** la feuille présente une opacité inférieure à 20 %.

12. Feuille de polyester selon une ou plusieurs des revendications 1 à 11, **caractérisée en ce que** les couches de base et/ou couches superficielles contiennent des additifs supplémentaires tels que des stabilisants et/ou des agents anti-adhérents.

13. Procédé de fabrication d'une feuille de polyester selon une ou plusieurs des revendications 1 à 12, comprenant les étapes de

    a) fabrication d'une feuille à une ou plusieurs couches par extrusion ou coextrusion et mise en forme de la masse fondue en films fondus plats ;
    b) étirage biaxial de la feuille et
    c) fixage thermique de la feuille étirée.

14. Utilisation d'une feuille de polyester selon une ou plusieurs des revendications 1 à 12 en tant que feuille barrière pour la vapeur d'eau et pour emballer la nourriture et les produits d'agrément.